# EUROPEAN PATENT APPLICATION

(11) **EP 2 429 100 A2**
(43) Date of publication of application: **14.03.2012**
(21) Application number: 10769903.5
(22) Date of filing: 23.04.2010
(51) Int. Cl.: H04B 10/13, H04B 10/28, H04B 10/02

(54) **LIGHT SOURCE FOR A WAVELENGTH DIVISION MULTIPLEXED OPTICAL COMMUNICATIONS CAPABLE OF THE HIGH-SPEED TRANSMISSION OF AN OPTICAL SIGNAL USING AN UNPOLARIZED LIGHT SOURCE, AND WAVELENGTH DIVISION MULTIPLEXING PASSIVE OPTICAL NETWORK COMPRISING SAME**

(30) Priority: 30.04.2009 KR 20090038002
(71) Applicant: Korea Advanced Institute of Science and Technology, Daejeon 305-701 (KR)
(72) Inventor: LEE, Chang-Hee, Daejeon 305-701 (KR); MUN, Sil-Gu, Daegu 702-769 (KR); LEE, Hoon-Keun, Kyungsan-Si Kyungsangbukdo 712-786 (KR); KIM, Joon-Young, Kwangju 502-738 (KR)
(74) Representative: Kudlek & Grunert Patentanwälte
(86) International application number: PCT/KR2010/002585
(87) International publication number: WO 2010/126258

(57) **Abstract**

An optical source for wavelength division multiplexed optical network according to the present invention comprises a broadband light source (BLS); an arrayed waveguide grating (AWG) for spectrum-dividing incoherent light outputted from the BLS; a circulator being connected between the BLS and the AWG; and a plurality of un-polarized light sources (UPLS) being respectively connected to the AWG, wherein the incoherent light which is spectrum-divided by the AWG is injected into the plurality of UPLS and thus the plurality of UPLS is wavelength-locked thereto.

In case of using an optical source for wavelength division multiplexed optical network and a wavelength division multiplexed-passive optical network having the same according to the present invention, It is especially possible to lower dramatically the power of incoherent light being injected into a wavelength-locked Fabry-Perot laser diode, while to enable a high transmission speed of 1.25 Gb/s or more, and possible to further lower noise intensity of a light source at given power of the incoherent light.

## Description

### Technical Field

The present invention relates to an optical source for wavelength division multiplexed optical network capable of high-speed transmission of an optical signal by using an un-polarized light source (UPLS) and a wavelength division multiplexed-passive optical network (WDM-PON) having the same. More specifically, the present invention relates to an optical source for wavelength division multiplexed optical network capable of high-speed transmission of an optical signal by using a UPLS and a WDM-PON having the same by replacing an existing polarized light source (PLS) outputting one-directional polarized light with a UPLS outputting un-polarized light so that it is possible to lower dramatically the power of injected incoherent light, while to obtain transmit an optical signal at a high speed of 1.25 Gb/s or more, and possible to provide high capacity and high speed of an optical network at low costs since it is possible to further lower noise intensity at given power of the incoherent light.

### Background

A current optical network provides a connection to the Internet mostly by ADSL, VDSL using a telephone cable, or a cable modem using a coaxial cable, etc. Such a telephone cable or a coaxial cable is all provide by using a copper cable and thus a bandwidth capable of being served to subscribers has a maximum limit of approximately 10 Mb/s, which may vary though depending on a transmission distance. However, while existing services mainly comprised of sounds and texts have been changed to image-centered services due to a fast expansion of the Internet, a demand for high speed of the optical network has been sharply increased. In order to provide services where images, data, and sounds are integrated through one network base as one method of satisfying such a demand for high speed, an evolution of respective optical networks, which have been built respectively by telecommunications business entities and CATV (cable TV) business entities, is required. In order to accommodate next-generation services such as HDTV/IP-TV, VOD (Video On Demand), and EOD (Education On Demand), etc., which require a wide bandwidth, a WDM-PON is recognized as an ultimate alternative which provides subscribers with a bandwidth of 100 Mb/s or more, while being capable of guaranteeing a high quality of service (QoS). Further, it is expected that a bandwidth of an optical network required in the future will be gradually increased.

Generally, an arrayed waveguide grating (AWG) is widely used ad a wavelength division multiplexing filter in a WDM-PON. However, when an external temperature is changed, a wavelength of a light source assigned to respective subscribers and a temperature of the AWG itself are to be changed. Thus, a low-cost light source having a wavelength-independent operation, i.e., a color-free operation is necessarily required in order to easily control and manage wavelength depending on a temperature change as a light source which is capable of being used independently of the wavelength assigned to the respective subscribers. As one example of such a light source having a wavelength-independent operation, Hyun-Deok Kim, et al, suggested a wavelength-locked Fabry-Perot laser diode in an article entitled "A low-cost WDM source with an ASE injected Fabry-Perot semiconductor laser" published at IEEE Photon, Technol. Lett., vol. 12, no. 8, pp. 1067-1069, in August of 2000. The wavelength-locked Fabry-Perot laser diode (F-P LD) by Hyun-Deok Kim, et al, injects incoherent light outputted from a broadband light source (BLS) into an F-P LD being oscillating in a multi-mode and locks the oscillation wavelength of the F-P LD to the wavelength of the injected incoherent light. In this case, an F-P LD having a characteristic of outputting only one-directional polarized light has been used as a transmission light source which is used at subscribers and an optical line termination.

In the meanwhile, a light source to be used for an optical fiber communications should have a low relative intensity of noise (RIN) for a superior quality of transmission. For example, because an F-P LD oscillating in a multi-mode is difficult to transmit an optical signal with a preferable quality due to a high RIN, such an F-P LD is not appropriate to be used as a light source for a WDM system or a light source for a WDM-PON. More specifically, if one mode out of a multi-mode of an F-P LD is selected, the F-P LD oscillating in a multi-mode is impossible to be used as a light source for communications because a high mode partition noise occurs. As one method of reducing a RIN, a method of configuring a wavelength-locked F-P LD where a mode partition noise is greatly reduced by injecting incoherent light from outside and oscillating an F-P LD in a quasi single mode and a WDM-PON having the same has been suggested. However, a WDM-PON using a wavelength-locked F-P LD may have the following problems when it is designed to enhance a transmission speed of data or to accommodate a lot of channels at one PON by narrowing a channel spacing.

In a BLS based on an amplified spontaneous emission (ASE) which is injected from outside for embodying a wavelength-locked F-P LD, a bandwidth of injected incoherent light is determined by a bandwidth of an AWG to be used. Thus, the incoherent light outputted from the ASE-based BLS should necessarily have a high noise because the incoherent light undergoes in advance a filtering process when being injected. Generally, as the transmission speed of data provided per each subscriber is higher, a light source to be used should have a more superior noise characteristic. However, the RIN of injected incoherent light becomes worse as a bandwidth of an AWG or a channel spacing is narrower. Because this also gives an influence to a noise characteristic of a wavelength-locked F-P LD, it is required to transmit the injected incoherent light with a reduced noise by operating the F-P LD at a high gain saturation region for a high transmission speed. However, it is required to increase power of the injected incoherent light in order to operate an F-P LD at a high gain saturation region, and thus output power of a BLS is also required to be increased. When the output power of a BLS is doubled, the price of the BLS is increased doubled or more. Accordingly, a BLS having a high output is high-priced which increases whole costs of a system. This may become a limiting factor against a high capacity and a high speed of a WDM-PON. Further, such problems appear commonly in both cases of using a wavelength-locked F-P LD and a reflective semiconductor optical amplifier (RSOA) as a light source for a WDM-PON.

### Summary

The present invention is designed to solve the prior art problems and thus to embody an optical source for wavelength division multiplexed optical network and a wavelength division multiplexed-passive optical network having the same capable of lowering dramatically the power of incoherent light being injected into a wavelength-locked Fabry-Perot laser diode by using an un-polarized light source (UPLS) outputting all-directional polarized light, while enabling a high transmission speed of 1.25 Gb/s or more, and further lowering noise intensity of a light source at given power of the incoherent light.

An optical source for wavelength division multiplexed optical network according to a first aspect of the present invention comprises a broadband light source (BLS); an arrayed waveguide grating (AWG) for spectrum-dividing incoherent light outputted from the BLS; a circulator being connected between the BLS and the AWG; and a plurality of un-polarized light sources (UPLS) being respectively connected to the AWG, wherein the incoherent light which is spectrum-divided by the AWG is injected into the plurality of UPLS and thus the plurality of UPLS is wavelength-locked thereto.

A wavelength division multiplexed-passive optical network (WDM-PON) according to a second aspect of the present invention comprises an optical line termination (OLT) having n-numbered first optical transceivers (TRx); a remote node (RN); a plurality of optical network units (ONT)(ONT1,...,ONTn) having n-numbered second optical transceivers (TRx); a single mode fiber (SMF) for connecting the OLT and the RN; and a plurality of distribution fibers (DF1,...,DFn) for connecting the RN and the plurality of optical network units (ONT) (ONT1,...,ONTn), wherein the first optical transceivers (TRx) respectively comprises a first optical transmitter (Tx) for transmitting a down-stream data optical signal; and a first optical receiver (Rx) for receiving an up-stream data optical signal, wherein the second optical transceivers (TRx) respectively comprises a second optical transmitter (Tx) for transmitting the up-stream data optical signal; and a second optical receiver (Rx) for receiving the down-stream data optical signal, wherein the first optical transmitter (Tx) comprises a first un-polarized light source (UPLS); and a first driver for modulating the first UPLS, and the second optical transmitter (Tx) comprises a second UPLS; and a second driver for modulating the second UPLS, and wherein the first optical receiver (Rx) comprises a first photodiode (PD) for converting the transmitted up-stream data optical signal into an electrical signal, and the second optical receiver (Rx) comprises a second photodiode (PD) for converting the transmitted down-stream data optical signal into an electrical signal.

A wavelength division multiplexed-passive optical network (WDM-PON) according to a third aspect of the present invention comprises an optical line termination (OLT); a remote node (RN); a plurality of optical network units (ONT)(ONT1,...,ONTn); a single mode fiber (SMF) for connecting the OLT and the RN; and a plurality of distribution fibers (DF1,...,DFn) for connecting the RN and the plurality of optical network units (ONT) (ONT1,...,ONTn), wherein the OLT comprises A-band broadband light source (A-band BLS), being oscillated at an A band, for outputting first incoherent light; B-band BLS, being oscillated at a B band, for outputting second incoherent light; a first circulator (circulator 1) being connected to the A-band BLS; a second circulator (circulator 2) being connected to the B-band BLS; a first arrayed waveguide grating (AWG1) having n-numbered output ports for filtering the first incoherent light into n-numbered groups; a first WDM filter (WDM1) being connected to the first circulator, the second circulator, and the first AWG, respectively; a second WDM filter (WDM2) being connected to the first circulator, the second circulator, and the SMF, respectively; and n-numbered first optical transceivers (TRx) respectively being connected to the first AWG, wherein the RN comprises a second AWG (AWG2) having n-numbered output ports for filtering the second incoherent light into n-numbered groups, wherein the plurality of optical network units (ONT) (ONT1,...,ONTn) respectively comprises n-numbered second optical transceivers (TRx) being connected to the second AWG, wherein the first optical transceivers (TRx) respectively comprise a third WDM filter (WDM 3) into which an up-stream data optical signal divided through the first AWG is inputted; a first optical transmitter (Tx), being connected to the third WDM filter, for transmitting a down-stream data optical signal; and a first optical receiver (Rx), being connected to the third WDM filter, for receiving the up-stream data optical signal, wherein the second optical transceivers (TRx) respectively comprise a fourth WDM filter (WDM 4) into which the down-stream data optical signal divided through the second AWG is inputted; a second optical transmitter (Tx), being connected to the fourth WDM filter, for transmitting the up-stream data optical signal; and a second optical receiver (Rx), being connected to the fourth WDM filter, for receiving the down-stream data optical signal, wherein the first optical transmitter (Tx) comprises a first un-polarized light source (UPLS) being wavelength-locked to the first incoherent light; and a first driver for modulating the first UPLS, wherein the second optical transmitter (Tx) comprises a second UPLS being wavelength-locked to the second incoherent light; and a second driver for modulating the second UPLS, wherein the first optical receiver (Rx) comprises a first photodiode (PD) for converting the transmitted up-stream data optical signal into an electrical signal, and wherein the second optical receiver (Rx) comprises a second photodiode (PD) for converting the transmitted down-stream data optical signal into an electrical signal.

A wavelength division multiplexed-passive optical network (WDM-PON) according to a fourth aspect of the present invention comprises an optical line termination (OLT); a remote node (RN); a plurality of optical network units (ONT)(ONT1,...,ONTn); a single mode fiber (SMF) for connecting the OLT and the RN; and a plurality of distribution fibers (DF1,...,DFn) for connecting the RN and the plurality of optical network units (ONT) (ONT1,...,ONTn), wherein the OLT comprises a first arrayed waveguide grating (AWG1) having n-numbered output ports; and n-numbered first optical transceivers (TRx) respectively being connected to the first AWG, wherein the RN comprises a second AWG (AWG2) having n-numbered output ports, wherein the plurality of optical network units (ONT) (ONT1,...,ONTn) respectively comprises n-numbered second optical transceivers (TRx) being connected to the second AWG, wherein the first optical transceivers (TRx) respectively comprise a first WDM filter (WDM1) into which an up-stream data optical signal divided through the first AWG is inputted; a first optical transmitter (Tx), being connected to the first WDM filter, for transmitting a down-stream data optical signal; and a first optical receiver (Rx), being connected to the first WDM filter, for receiving the up-stream data optical signal, wherein the second optical transceivers (TRx) respectively comprise a second WDM filter (WDM2) into which the down-stream data optical signal divided through the second AWG is inputted; a second optical transmitter (Tx), being connected to the second WDM filter, for transmitting the up-stream data optical signal; and a second optical receiver (Rx), being connected to the second WDM filter, for receiving the down-stream data optical signal, wherein the first optical transmitter (Tx) comprises a first broadband or multi-wavelength un-polarized light source (UPLS); and a first driver for modulating the first broadband or multi-wavelength UPLS, and the second optical transmitter (Tx) comprises a second broadband or multi-wavelength UPLS; and a second driver for modulating the second broadband or multi-wavelength UPLS, and wherein the first optical receiver (Rx) comprises a first photodiode (PD) for converting the transmitted up-stream data optical signal into an electrical signal, and the second optical receiver (Rx) comprises a second photodiode (PD) for converting the transmitted down-stream data optical signal into an electrical signal.

A wavelength division multiplexed-passive optical network (WDM-PON) for transmitting a broadcast signal and a point-to-point signal according to a fifth aspect of the present invention comprises an optical line termination (OLT); a remote node (RN); a plurality of optical network units (ONT)(ONT1,...,ONTn); a single mode fiber (SMF) for connecting the OLT and the RN; and a plurality of distribution fibers (DF1,...,DFn) for connecting the RN and the plurality of optical network units (ONT) (ONT1,...,ONTn), wherein the OLT comprises a first arrayed waveguide grating (AWG1) having n-numbered output ports; n-numbered first optical transceivers (TRx) respectively being connected to the first AWG; and a broadband or multi-wavelength un-polarized light source (UPLS) for outputting an optical signal modulated by a broadcast signal; and a WDM filter for combining the optical signal modulated by the broadcast signal with a down-stream data optical signal multiplexed at the first AWG, wherein the first optical transceivers (TRx) respectively comprise a first WDM filter (WDM1) into which an up-stream data optical signal divided through the first AWG is inputted; a first optical transmitter (Tx), being connected to the first WDM filter, for transmitting the down-stream data optical signal; and a first optical receiver (Rx), being connected to the first WDM filter, for receiving the up-stream data optical signal, wherein the RN comprises a second AWG (AWG2) having n-numbered output ports, wherein the plurality of optical network units (ONT) (ONT1,...,ONTn) respectively comprises n-numbered second optical transceivers (TRx) being connected to the second AWG, and wherein the second optical transceivers (TRx) respectively comprise a second WDM filter (WDM2) into which the down-stream data optical signal divided through the second AWG is inputted; a second optical transmitter (Tx), being connected to the second WDM filter, for transmitting the up-stream data optical signal; a second optical receiver (Rx2), being connected to the second WDM filter, for receiving the down-stream data optical signal; and a third optical receiver (Rx3), being connected to the second WDM filter, for receiving the optical signal modulated by the broadcast signal which is outputted from the broadband or multi-wavelength UPLS.

In an optical source for wavelength division multiplexed optical network capable of high-speed transmission of an optical signal by using an un-polarized light source (UPLS) and a wavelength division multiplexed-passive optical network (WDM-PON) having the same according to the present invention, the following advantages are accomplished:

1. It is possible to obtain a low relative intensity noise (RIN) even when inserting low power of incoherent light.

2. In case of using an un-polarized light source (UPLS), it is possible to reduce the power of output light of BLS which is required at a polarized light source (PLS) to approximately 1/10 and thus to reduce whole costs of the system significantly so that an optical network can be embodied at low costs.

3. Because an un-polarized light source (UPLS) has a feature that a relative intensity noise (RIN) of an output signal is lower when compared with a prior art polarized light source (PLS) even when inserting incoherent light with same power, it is possible to accomplish a higher transmission speed.

4. While the performance of a polarized Fabry-Perot laser diode is lowered due to the reduction of output power and the increase of noises when a wavelength of injected incoherent light exists between mode wavelengths of the polarized Fabry-Perot laser diode in prior art, lowering of the performance of an un-polarized Fabry-Perot laser diode does not occur by using a feature that respective polarized lights oscillate at different wavelengths when using the un-polarized Fabry-Perot laser diode.

5. While an applicable technical field is narrow because a transmission speed is limited due to the increase of noises at the time of spectrum-division in an existing polarized light source, an un-polarized light source (UPLS) according to the present invention is possible to increase the transmission speed two (2) times or more and thus to enhance the transmission characteristic.

6. It is possible to accommodate a broadcast signal effectively.

Further features and advantages of the present invention can be obviously understood with reference to the accompanying drawings where same or similar reference numerals indicate same components.

### Brief Description of the Drawings

Fig. 1 illustrates an optical source for a wavelength division multiplexed optical network using an un-polarized light source which is wavelength-locked to injected incoherent light according to the present invention.

Fig. 2 illustrates noises of output lights which are varied depending on injection power of incoherent light in order to compare the performances between a polarized light source being wavelength-locked to injected incoherent light and an un-polarized light source being wavelength-locked to injected incoherent light according to the present invention.

Fig. 3 illustrates an output spectrum of an un-polarized Fabry-Perot laser diode where oscillation wavelengths are different depending on polarized lights in order to compare the performances between a general polarized light source being wavelength-locked to injected incoherent light and an un-polarized light source being wavelength-locked to injected incoherent light according to the present invention.

Fig. 4 illustrates a first embodiment of a wavelength division multiplexed-passive optical network having an un-polarized light source which is wavelength-locked to injected incoherent light according to one embodiment of the present invention illustrated in Fig. 1.

Fig. 5 illustrates a wavelength division multiplexed-passive optical network using an un-polarized light source which is spectrum-divided according to a second embodiment of the present invention.

Fig. 6 illustrates a wavelength division multiplexed-passive optical network for transmitting a broadcast signal and a point-to-point signal using an un-polarized light source according to a third embodiment of the present invention.

### Detailed Description

Hereinafter, the present invention will be described in more detail with reference to the embodiments of the present invention and the appended drawings.

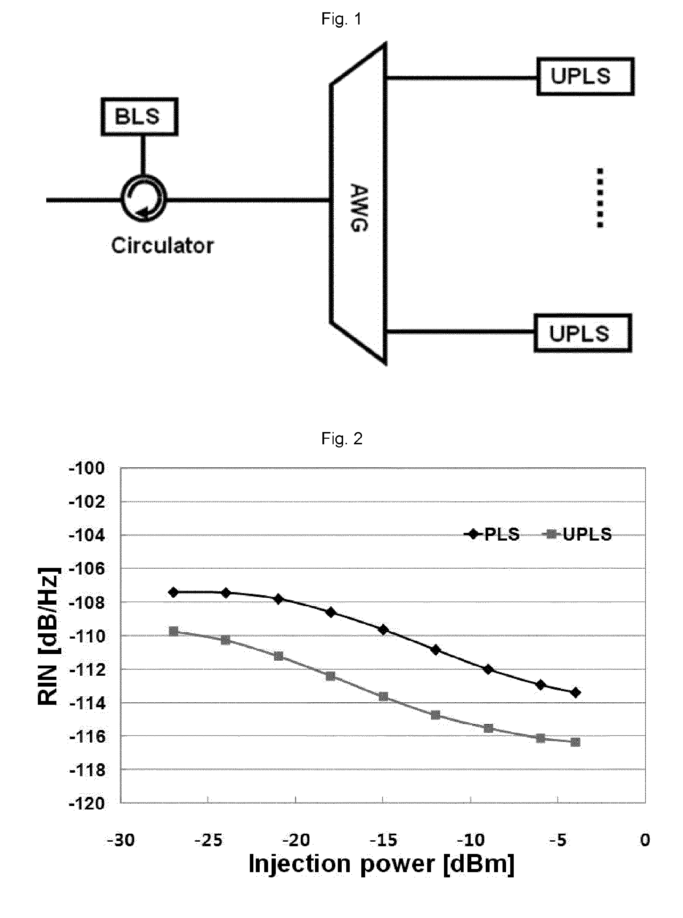

Fig. 1 illustrates a view where incoherent light outputted from BLS is injected into an un-polarized light source and the un-polarized light source is wavelength-locked to the injected incoherent light, according to one embodiment of the present invention.

Referring to Fig. 1, an optical source for a wavelength division multiplexed optical network according to one embodiment of the present invention comprises a broadband light source (BLS); an arrayed waveguide grating (AWG) for spectrum-dividing incoherent light outputted from the BLS; a circulator being connected between the BLS and the AWG; and a plurality of un-polarized light sources (UPLS) being respectively connected to the AWG, where the incoherent light which is spectrum-divided by the AWG is injected into the plurality of UPLS and thus the plurality of UPLS is wavelength-locked thereto. Herein, the circulator may be embodied alternatively by an optical coupler. Hereinbelow, an operation principle of an optical source for a wavelength division multiplexed optical network according to one embodiment of the present invention will be described in detail.

Referring back to Fig. 1, the incoherent light outputted from the BLS is inputted into the AWG thorough the circulator. After that, the incoherent light is divided according to each spectrum depending on a plurality of output ports of the AWG. In this case, the incoherent light has a sharply increased noise, while being spectrum-divided at the AWG. After that, the spectrum-divided incoherent light is injected into the plurality of un-polarized light sources (UPLS) being connected to the output ports of the AWG. The plurality of UPLS is wavelength-locked respectively to the injected incoherent light, and outputs a wavelength which is the same as that of the injected incoherent light. That is, the plurality of UPLS respectively outputs optical signals identical to center wavelengths of pass bands of the plurality of output ports of the AWG. The optical signals outputted from the plurality of UPLS again pass the AWG and are multiplexed, and then are outputted through the circulator.

An un-polarized Fabry-Perot light diode (F-P LD) or an un-polarized reflective semiconductor optical amplifier (RSOA) may be employed as a UPLS being used in one embodiment of the present invention. In addition, in case of an un-polarized F-P LD, it is possible to enhance injection efficiency by an anti-reflection coating on a front mirror thereof or to enhance output power by a high-reflection coating on a back mirror. Meanwhile, in an un-polarized F-P LD, a difference in output power is increased depending on polarization thereof as bias current is increased, if the bias current is the same as or higher than threshold current.

In the meantime, the narrower a pass band width of the AWG is or the narrower a channel spacing is, the worse a relative intensity noise (RIN) of the injected incoherent light is. In case of using a general polarized light source (PLS) as a light source which is wavelength-locked to injected incoherent light, it is required to transmit the incoherent light by operating the PLS at a high gain saturation region and thus by reducing a noise of the incoherent light for transmitting an optical signal at a high speed. That is, it is required to increase the injection power of the incoherent light and therefore to increase the output power of the BLS.

Fig. 2 illustrates noises of output lights which are varied depending on injection power of incoherent light in order to compare the performances between a polarized light source being wavelength-locked to injected incoherent light and an un-polarized light source being wavelength-locked to injected incoherent light according to the present invention. That is, measured values of RIN of optical signals outputted from a polarized light source (PLS) which is wavelength-locked to injected incoherent light and an un-polarized light source (UPLS) which is wavelength-locked to injected incoherent light depending on injection power of the incoherent light are illustrated in Fig. 2.

Generally, in case of a light source which is wavelength-locked to injected incoherent light, as the injection power of incoherent light becomes higher, a polarized light source (PLS) and an un-polarized light source (UPLS) are operated at a higher gain saturation region and thus reduce noises of the injected incoherent light more. Accordingly, as shown in Fig. 2, RIN of light outputted from a light source which is wavelength-locked is lowered as the injection power of the incoherent light becomes higher. As illustrated in Fig. 2, in case that RIN required for a high speed transmission is, for example, approximately -112 dB/Hz, the incoherent light of approximately -9dBm is required to be injected for the polarized light source (PLS), and thus power of light outputted from the BLS is also required to be higher along therewith for this purpose. For example, when it is assumed of a WDM-PON system where the number of channels (or the number of subscribers) is 32 and a transmission length is 20 km, a BLS having output power of 21 dBm which is higher by 30 dB than -9 dBm is required, because a loss in the optical fibers and the optical elements is approximately 11 dB, a filtering loss in the AWG is 3 dB, and a loss for the subscribers is 16 dB. However, since a high-powered BLS increases a Rayleigh backscattering and a non-linear effect, performance of the system is limited. In addition, since a high-powered BLS is an expensive optical element, total costs of the system are increased which may become a limiting factor against embodying an optical network economically.

Meanwhile, in case using an un-polarized light source (UPLS) being used in one embodiment of the present invention, injection power of the incoherent light under the same condition (in case that RIN is approximately -112 dB/Hz) is approximately -19dBm. Therefore, even if low power of the incoherent light is injected, it is possible to obtain a low RIN in one embodiment of the present invention. That is, in case that a required vale of RIN is approximately -112dB/Hz, the un-polarized light source (UPLS) is required to inject the incoherent light of approximately -19dBm. In case of using an un-polarized light source (UPLS) under the same condition as a polarized light source (PLS) as described above (that is, at a WDM-PON system where the number of channels or the number of subscribers is 32 and a transmission length is 20 km), a BLS having output power of 11 dBm which is higher by 30 dB than -19 dBm is required. That is, a require output power of the BLS differs 10 dB in case of using an un-polarized light source (UPLS) when compared with a case of using a polarized light source (PLS). Herein, because 10 dB means a difference of ten (10) times as a log value, it is possible to reduce the output power to one tenth (1/10) and therefore to reduce total costs of the system so that an economic optical network may be embodied. Further, because an un-polarized light source (UPLS) has a lower output noise (RIN) compared with a polarized light source (PLS) when injecting same powered incoherent light, it is possible to increase a transmission speed higher. Generally, when RIN is lowered by 3 dB, a transmission speed may be increased to two (2) times. As illustrated in Fig. 2, an un-polarized light source (UPLS) has a difference vale of RIN by approximately 4 dB to its maximum (in case that injection power of the incoherent light is approximately -12 dBm). Accordingly, since a transmission speed may be increased to two (2) times or more in the present invention compared with prior art, it is possible to embody an optical network with a high speed.

In the meantime, an un-polarized light source (UPLS) which is wavelength-locked to injected incoherent light has another advantage when compared with a polarized light source (PLS) which is wavelength-locked to injected incoherent light. Specifically, an F-P LD is a light source which oscillates in a multi-mode. Such an F-P LD may be used as a light source which is wavelength-licked by injecting incoherent light thereinto. In case that an F-P LD is a wavelength-locked polarized F-P LD, the performance thereof is superior when mode wavelengths of the F-P LD is similar to a wavelength of the injected incoherent light. On the other hand, in case that the wavelength of the injected incoherent light exists between the mode wavelengths of the polarized F-P LD, the output power is decreased and the noise is increased so that the performance of the wavelength-locked polarized F-P LD is lowered. However, such a lowering of performance which occurs in the wavelength-locked polarized F-P LD does not occur in an un-polarized F-P LD which is wavelength-locked to incoherent light.

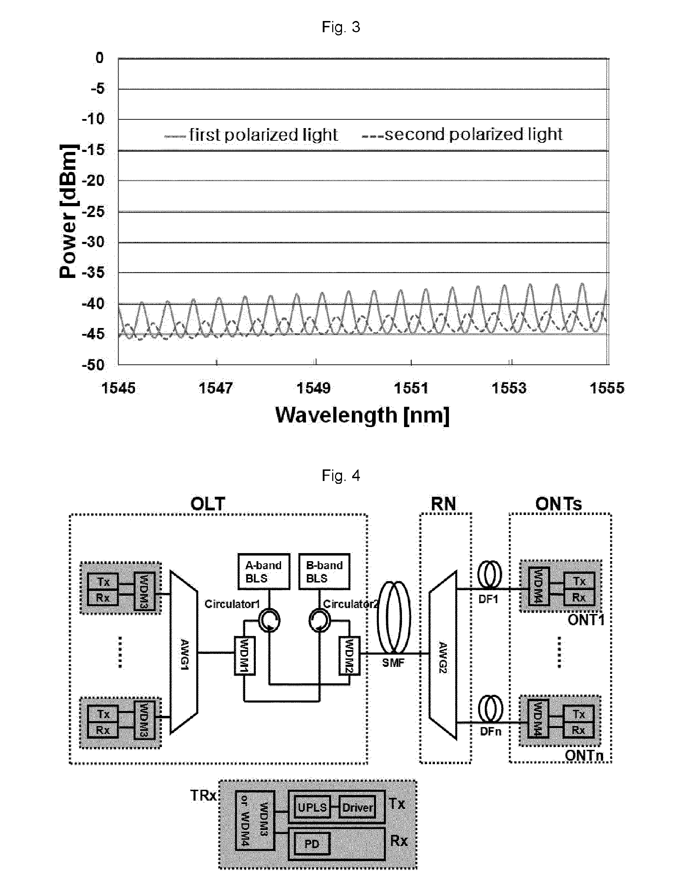

More specifically, Fig. 3 illustrates an output spectrum of an un-polarized Fabry-Perot laser diode where oscillation wavelengths are different depending on polarized lights in order to compare the performances between a general polarized light source being wavelength-locked to injected incoherent light and an un-polarized light source being wavelength-locked to injected incoherent light according to the present invention.

Referring to Fig. 3, in case that the wavelength of the injected wavelength-locked incoherent light exists, for example, between the mode wavelengths of a first polarization of an F-P LD illustrated in Fig. 3, the performance of a general polarized F-P LD is lowered. However, an un-polarized F-P LD outputs not only the first polarization light but also a second polarization light which is perpendicular to the first polarization light. Therefore, because the wavelength of the injected incoherent light exists matches with the mode wavelengths of the second polarization light even in case that the wavelength of the injected incoherent light exists between the mode wavelengths of the first polarization light of an F-P LD, the lowering of performance is prevented in an un- polarized F-P LD. If a cavity length and a medium, etc. are controlled when manufacturing an un-polarized F-P LD, it is possible to make the multi-mode wavelengths of the first polarization light and the second first polarization light to have different values as illustrated in Fig. 3. In this case, it is possible to enhance injection efficiency of the un- polarized F-P LD by an anti-reflection coating on a front mirror or to enhance output power of the un-polarized F-P LD by a high-reflection coating on a back mirror. Further, in the un-polarized F-P LD, a difference in output power is increased depending on polarization thereof if bias current is increased, if the bias current is the same as or higher than threshold current.

Fig. 4 illustrates a first embodiment of a wavelength division multiplexed-passive optical network having an un-polarized light source which is wavelength-locked to injected incoherent light according to one embodiment of the present invention illustrated in Fig. 1.

Referring to Fig. 4, a WDM-PON according to one embodiment of the present invention comprises an optical line termination (OLT), a remote node (RN), a plurality of optical network units (ONT)(ONT1,...,ONTn), a single mode fiber (SMF) for connecting the OLT and the RN, and a plurality of distribution fibers (DF1,...,DFn) for connecting the RN and the plurality of optical network units (ONT) (ONT1,...,ONTn). Herein, the OLT comprises A-band broadband light source (hereinafter referred to "A-band BLS"), being oscillated at an A band, for outputting first incoherent light; B-band BLS, being oscillated at a B band, for outputting second incoherent light; a first circulator (circulator 1) being connected to the A-band BLS; a second circulator (circulator 2) being connected to the B-band BLS; a first arrayed waveguide grating (AWG1) having n-numbered output ports for filtering the first incoherent light into n-numbered groups; a first WDM filter (WDM1) being connected to the first circulator, the second circulator, and the first AWG, respectively; a second WDM filter (WDM2) being connected to the first circulator, the second circulator, and the SMF, respectively; and n-numbered first optical transceivers (TRx) respectively being connected to the first AWG, wherein the RN comprises a second AWG2 having n-numbered output ports for filtering the second incoherent light into n-numbered groups. Further, the plurality of optical network units (ONT) (ONT1,...,ONTn) respectively comprises n-numbered second optical transceivers (TRx) being connected to the second AWG2.

In the WDM-PON according to a first embodiment of the present invention illustrated in Fig. 4 as described above, the first optical transceivers (TRx) respectively comprise a third WDM filter (WDM 3) into which an up-stream data optical signal divided through the first AWG is inputted; a first optical transmitter (Tx), being connected to the third WDM filter, for transmitting a down-stream data optical signal; and a first optical receiver (Rx), being connected to the third WDM filter, for receiving the up-stream data optical signal. The second optical transceivers (TRx) respectively comprise a fourth WDM filter (WDM 4) into which the down-stream data optical signal divided through the second AWG is inputted; a second optical transmitter (Tx), being connected to the fourth WDM filter, for transmitting the up-stream data optical signal; and a second optical receiver (Rx), being connected to the fourth WDM filter, for receiving the down-stream data optical signal. The first optical transmitter (Tx) comprises a first un-polarized light source (UPLS) being wavelength-locked to the first incoherent light; and a first driver for modulating the first UPLS, and the second optical transmitter (Tx) comprises a second UPLS being wavelength-locked to the second incoherent light; and a second driver for modulating the second UPLS. Further, the first optical receiver (Rx) comprises a first photodiode (PD) for converting the transmitted up-stream data optical signal into an electrical signal, and the second optical receiver (Rx) comprises a second photodiode (PD) for converting the transmitted down-stream data optical signal into an electrical signal.

Hereinbelow, an operation principle of an optical source at a WDM-PON according to a first embodiment of the present invention illustrated in Fig. 4 described above will be described in detail.

Referring back to Fig. 4, the A-band BLS and the B-band BLS which oscillate at an A-band and a B-band of the OLT, respectively, are used injection light sources of a UPLS which is wavelength-locked for transmitting up-stream signals and down-stream signals. Although only an explanation about an operation of an OLT light source for up-stream signals using a UPLS will be given in the present specification, any skilled person in the art may fully understand that such an explanation will be also equally applied to an OLT light source for down-stream signals.

Second incoherent light outputted from the B-band BLS of the OLT passes the second circulator, the second WDM filter (WDM2), and the SMF, and then is filtered through the second AWG of the RN and is divided. The signals divided by the second AWG are inputted into the plurality of ONT (ONT1,...,ONTn) through the plurality of distribution fibers (DF1,...,DFn). Respective inputted signals pass through the fourth WDM filter within the OLT and are injected into the respective UPLS of the second optical transmitters (Tx) and then wavelength-lock the respective UPLS. Up-stream data optical signals outputted from the respective UPLS which is wavelength-locked to the injected second coherent light pass through the fourth WDM filter, the plurality of distribution fibers (DF1,...,DFn), the second AWG of the RN, and the SMF, and then pass through the second WDM, the second circulator, and the first WDM of the OLT side. After that, the up-stream data optical signals, which have passed through the first WDM, pass through the first AWG and are de-multiplexed into n groups, and then pass through the third WDM filter of the OLT. After that, the up-stream data optical signals are transmitted to the first optical receives (Rx) which are receiving ends.

In the first embodiment of the present invention illustrated in Fig. 4, an un-polarized F-P LD or an un-polarized RSOA may be employed as the first UPLS and the second UPLS which are used respectively at the first transmitters (Tx) of the OLT and the second receivers (Rx) of the plurality of ONT (ONT1,...,ONTn).

The second incoherent light outputted from the B-band BLS has a feature of un-polarized light, and is increased sharply in noise when being filtered and divided through the second AWG. Because the light sources used at the first or second transmitters (Tx) of the OLT or the ONT in prior art output only the first polarized light which solely oscillates in one direction, only the first polarized light with one direction among the inputted spectrum-divided, un-polarized incoherent light is inputted, amplified, and modulated, and then outputted at a light source which is used for the OLT or the OLT, while polarized light which oscillates perpendicular to the first polarized light has been wasted, even if the spectrum-divided, un-polarized incoherent light is injected into the light source. Particularly, because the spectrum-divided, un-polarized incoherent light, which has a RIN value of -109 dB/Hz, has approximately -106 dB/Hz which is higher by 3 dB in terms of the RIN value when only the first polarized light with one direction is passing, it is required to operate the light sources, which are used at the first or second transmitters (Tx) of the OLT or the ONT, at a high gain saturation region for 1.25 Gb/s transmission. However, spectrum-divided, un-polarized amplified spontaneous emission (ASE) may be all employed in case that the first UPLS and the second UPLS are used at the OLT and the ONT like the present invention, and 1.25 Gb/s transmission may be possible eve in case of injecting low powered incoherent light so that it is possible to embody a WDM-PON at low costs.

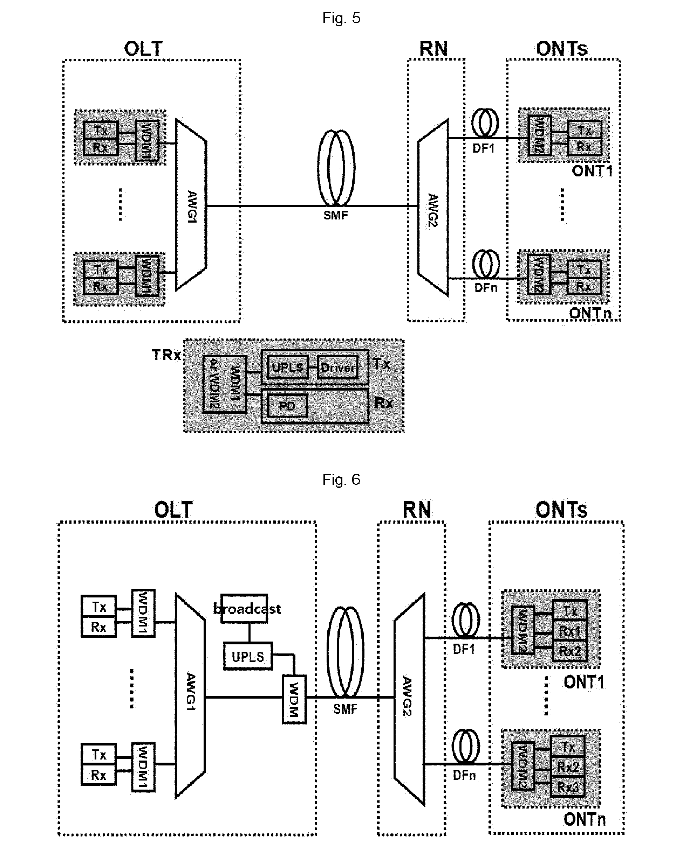

Fig. 5 illustrates a wavelength division multiplexed-passive optical network using an un-polarized light source which is spectrum-divided according to a second embodiment of the present invention.

Referring to Fig. 5, a wavelength division multiplexed-passive optical network (WDM-PON) according to a second embodiment of the present invention comprises an OLT, a RN, a plurality of ONT (ONT1,...,ONTn), an (SMF for connecting the OLT and the RN, and a plurality of distribution fibers (DF1,...,DFn) for connecting the RN and the plurality of ONT (ONT1,...,ONTn). Herein, the OLT comprises a first AWG1 having n-numbered output ports; and n-numbered first optical transceivers (TRx) respectively being connected to the first AWG. Further, the RN comprises a second AWG (AWG2) having n-numbered output ports. Furthermore, the plurality of ONT (ONT1,...,ONTn) respectively comprises n-numbered second optical transceivers (TRx) being connected to the second AWG.

In the WDM-PON according to a second embodiment of the present invention illustrated in Fig. 5 as described above, the first optical transceivers (TRx) respectively comprise a first WDM filter (WDM1) into which an up-stream data optical signal divided through the first AWG is inputted; a first optical transmitter (Tx), being connected to the first WDM filter, for transmitting a down-stream data optical signal; and a first optical receiver (Rx), being connected to the first WDM filter, for receiving the up-stream data optical signal, and the second optical transceivers (TRx) respectively comprise a second WDM filter (WDM2) into which the down-stream data optical signal divided through the second AWG is inputted; a second optical transmitter (Tx), being connected to the second WDM filter, for transmitting the up-stream data optical signal; and a second optical receiver (Rx), being connected to the second WDM filter, for receiving the down-stream data optical signal. The first optical transmitter (Tx) comprises a first broadband or multi-wavelength un-polarized light source (UPLS); and a first driver for modulating the first broadband or multi-wavelength UPLS, and the second optical transmitter (Tx) comprises a second broadband or multi-wavelength UPLS; and a second driver for modulating the second broadband or multi-wavelength UPLS. Further, the first optical receiver (Rx) comprises a first photodiode (PD) for converting the transmitted up-stream data optical signal into an electrical signal, and the second optical receiver (Rx) comprises a second photodiode (PD) for converting the transmitted down-stream data optical signal into an electrical signal.

In a second embodiment of the present invention illustrated in Fig. 5, an un-polarized F-P LD or an un-polarized RSOA may be employed as the first broadband or multi-wavelength UPLS and the second broadband or multi-wavelength UPLS which are used respectively at the first transmitters (Tx) and the second transmitters (Tx).

Hereinbelow, an operation principle of an optical source at the WDM-PON according to a second embodiment of the present invention illustrated in Fig. 5 described above will be described in detail. Although only an explanation about an operation of an OLT light source for up-stream signals using a UPLS will be given in the present specification, any skilled person in the art may fully understand that such an explanation will be also equally applied to an OLT light source for down-stream signals.

Referring back to Fig. 5, output lights of the second broadband or multi-wavelength UPLS located in the plurality of ONT (ONT1,...,ONTn) is directly modulated and is transmitted in an up-stream direction in the WDM-PON according to a second embodiment of the present invention. The broadband up-stream data optical signals or multi-wavelength up-stream data optical signals outputted from the second broadband or multi-wavelength UPLS pass through the second WDM filter and the plurality of distribution fibers (DF1,...,DFn), are spectrum-divided by the second AWG of the RN, and then wavelength components which are identical with a transmission wavelength of the second AWG are selected and transmitted. Accordingly, the up-stream data optical signals having different transmission wavelengths selected by n-numbered ports of the second AWG are multiplexed by the second AWG, pass through the SMF, and are transmitted to the OLT. The multiplexed up-stream data optical signals are de-multiplexed at the first AWG located in the OLT, pass through the first WDM filter, and then are respectively received at the first optical receivers (Rx). In this type of WDM-PON, the output lights of the first broadband or multi-wavelength UPLS and the second broadband or multi-wavelength UPLS are increased sharply in noise during the process of spectrum-division at the first AWG and the second AWG, respectively. In prior art, only one- directional polarized light is transmitted by using either a polarized light source or a light source for transmitting only one-directional polarized light as a light source using such a spectrum-division method at the ONT and the OLT. However, if using an un- polarized light source (UPLS) as a light source for the up-stream data optical signals and a light source for the down-stream data optical signals, respectively, it is possible to increase a transmissible bandwidth, because such an UPLS is superior in noise characteristic when compared to a polarized light source (PLS) even though the output lights are spectrum-divided with an identical bandwidth.

Fig. 6 illustrates a wavelength division multiplexed-passive optical network for transmitting a broadcast signal and a point-to-point signal using an un-polarized light source according to a third embodiment of the present invention.

Referring to Fig. 6, a WDM-PON according to a third embodiment of the present invention comprises an OLT, a RN, a plurality of ONT (ONT1,...,ONTn), a SMF for connecting the OLT and the RN, and a plurality of distribution fibers (DF1,...,DFn) for connecting the RN and the plurality of optical network units (ONT) (ONT1,...,ONTn). Herein, the OLT comprises a first AWG1 having n-numbered output ports; n-numbered first optical transceivers (TRx) respectively being connected to the first AWG; and a broadband or multi-wavelength un-polarized light source (UPLS) for outputting an optical signal modulated by a broadcast signal; and a WDM filter for combining the optical signal modulated by the broadcast signal with a down-stream data optical signal multiplexed at the first AWG, wherein the first optical transceivers (TRx) respectively comprise a first WDM filter (WDM1) into which an up-stream data optical signal divided through the first AWG is inputted; a first optical transmitter (Tx), being connected to the first WDM filter, for transmitting the down-stream data optical signal; and a first optical receiver (Rx), being connected to the first WDM filter, for receiving the up-stream data optical signal. Further, the RN comprises a second AWG2 having n-numbered output ports. Moreover, the plurality of optical network units (ONT) (ONT1,...,ONTn) respectively comprises n-numbered second optical transceivers (TRx) being connected to the second AWG2.

In the WDM-PON according to a third embodiment of the present invention illustrated in Fig. 6 described above, the second optical transceivers (TRx) respectively comprise a second WDM filter (WDM2) into which the down-stream data optical signal divided through the second AWG is inputted; a second optical transmitter (Tx), being connected to the second WDM filter, for transmitting the up-stream data optical signal; a second optical receiver (Rx2), being connected to the second WDM filter, for receiving the down-stream data optical signal; and a third optical receiver (Rx3), being connected to the second WDM filter, for receiving the optical signal modulated by the broadcast signal which is outputted from the broadband or multi-wavelength UPLS.

In a third embodiment of the present invention illustrated in Fig. 6, an un-polarized F-P LD or an un-polarized RSOA may be employed as the broadband or multi-wavelength UPLS for transmitting the broadcast signal.

Hereinbelow, an operation principle of an optical source at the WDM-PON according to a second embodiment of the present invention illustrated in Fig. 6 described above will be described in detail.

Referring back to Fig. 6, the down-stream data optical signals transmitted from the first optical transmitters (Tx) located in the OLT are multiplexed at the first AWG and then are combined with the broadcast signal at the WDM filter (WDM). In this case, the broadband or multi-wavelength UPLS being used for transmitting the broadcast signal oscillates at a wavelength band different from that of light sources for transmitting the up-stream data optical signals and the down-stream data optical signals. The multiplexed down-stream data optical signals and the broadcast signal pass through the SMF and then are de-multiplexed at the second AWG of the RN. The de-multiplexed down-stream data optical signals and the broadcast signal pass through the plurality of distribution fibers (DF1,...,DFn) and then are divided into the down-stream data optical signals and the broadcast signal at the second WDM filters (WDM2) of the plurality of optical network units (ONT) (ONT1,...,ONTn). The divided down-stream data optical signals are transmitted to the second optical receivers (Rx2), and the divided broadcast signal is transmitted to the third optical receiver (Rx3). The up-stream data optical signals transmitted from the second optical transmitters (Tx) located in the plurality of optical network units (ONT) (ONT1,...,ONTn) are multiplexed during passing through the second AWG. The multiplexed up-stream data optical signals pass through the SMF and the WDM filter (WDM) of the OLT, and then are de- multiplexed at the first AWG. The de- multiplexed up-stream data optical signals are transmitted to the first optical receivers (Rx) through the first WDM filters (WDM1).

It is possible to increase the number of broadcast signal or enhance the quality of broadcast signal which can be provided to the plurality of ONT, because the un-polarized broadband or multi-wavelength UPLS may provide broadcast service with multiple subscribers by one light source, while it is lower in noise when compared to the existing polarized light source (PLS) even when being spectrum-divided with an identical bandwidth.

As various modifications could be made in the constructions and method herein described and illustrated without departing from the scope of the present invention, it is intended that all matter contained in the foregoing description or shown in the accompanying drawings shall be interpreted as illustrative rather than limiting. Thus, the breadth and scope of the present invention should not be limited by any of the above-described exemplary embodiments, but should be defined only in accordance with the following claims appended hereto and their equivalents.

## Claims

1. An optical source for wavelength division multiplexed optical network comprising:
a broadband light source (BLS);
an arrayed waveguide grating (AWG) for spectrum-dividing incoherent light outputted from the BLS;
a circulator being connected between the BLS and the AWG; and
a plurality of un-polarized light sources (UPLS) being respectively connected to the AWG,
wherein the incoherent light which is spectrum-divided by the AWG is injected into the plurality of UPLS and thus the plurality of UPLS is wavelength-locked thereto.

2. The optical source for wavelength division multiplexed optical network of claim 1,
wherein the circulator is embodied by an optical coupler.

3. The optical source for wavelength division multiplexed optical network of claim 1 or 2,
wherein the plurality of un-polarized light sources (UPLS) respectively is an un-polarized Fabry-Perot laser diode (F-P LD) or an un-polarized a reflective semiconductor optical amplifier (RSOA).

4. The optical source for wavelength division multiplexed optical network of claim 3,
wherein in case that the plurality of un-polarized light sources (UPLS) is the un-polarized Fabry-Perot laser diode (F-P LD), the un-polarized F-P LD outputs both a first polarization light and a second polarization light perpendicular to the first polarization light, which have different values in oscillating wavelengths depending polarization.

5. The optical source for wavelength division multiplexed optical network of claim 3,
wherein in case that the plurality of un-polarized light sources (UPLS) is the un-polarized Fabry-Perot laser diode (F-P LD), the un-polarized F-P LD has high injection efficiency by an anti-reflection coating on a front mirror

6. The optical source for wavelength division multiplexed optical network of claim 3,
wherein in case that the plurality of un-polarized light sources (UPLS) is the un-polarized Fabry-Perot laser diode (F-P LD), the un-polarized F-P LD has high output power by a high-reflection coating on a back mirror.

7. The optical source for wavelength division multiplexed optical network of claim 3,
wherein in case that the plurality of un-polarized light sources (UPLS) is the un-polarized Fabry-Perot laser diode (F-P LD), output power of the un-polarized F-P LD is increased depending on polarization thereof as bias current is increased.

8. A wavelength division multiplexed-passive optical network comprising;
an optical line termination (OLT) having n-numbered first optical transceivers (TRx);
a remote node (RN);
a plurality of optical network units (ONT)(ONT1,...,ONTn) having n-numbered second optical transceivers (TRx);
a single mode fiber (SMF) for connecting the OLT and the RN; and
a plurality of distribution fibers (DF1,...,DFn) for connecting the RN and the plurality of optical network units (ONT) (ONT1,...,ONTn),
wherein the first optical transceivers (TRx) respectively comprises a first optical transmitter (Tx) for transmitting a down-stream data optical signal; and a first optical receiver (Rx) for receiving an up-stream data optical signal,
wherein the second optical transceivers (TRx) respectively comprises a second optical transmitter (Tx) for transmitting the up-stream data optical signal; and a second optical receiver (Rx) for receiving the down-stream data optical signal,
wherein the first optical transmitter (Tx) comprises a first un-polarized light source (UPLS); and a first driver for modulating the first UPLS, and the second optical transmitter (Tx) comprises a second UPLS; and a second driver for modulating the second UPLS, and
wherein the first optical receiver (Rx) comprises a first photodiode (PD) for converting the transmitted up-stream data optical signal into an electrical signal, and the second optical receiver (Rx) comprises a second photodiode (PD) for converting the transmitted down-stream data optical signal into an electrical signal.

9. The wavelength division multiplexed-passive optical network of claim 8,
wherein the first UPLS is wavelength-locked to first incoherent light oscillated at an A-band and outputted by an A-band broadband light source (A-band BLS) located in the OLT, and
wherein the second UPLS is wavelength-locked to second incoherent light oscillated at a B-band and outputted by a B-band broadband light source (B-band BLS) located in the OLT.

10. The wavelength division multiplexed-passive optical network of claim 9,
wherein the first incoherent light and the second incoherent light are respectively an amplified spontaneous emission (ASE)-based incoherent light.

11. The wavelength division multiplexed-passive optical network of claim 8,
wherein the first UPLS and the second UPLS are respectively embodied by a broadband UPLS or a multi-wavelength UPLS.

12. The wavelength division multiplexed-passive optical network anyone of claims 8 to 11,
wherein the first UPLS and the second UPLS are respectively an un-polarized Fabry-Perot laser diode (F-P LD) or an un-polarized a reflective semiconductor optical amplifier (RSOA).

13. The wavelength division multiplexed-passive optical network of claim 12,
wherein incase that the first UPLS and the second UPLS are respectively the un-polarized Fabry-Perot laser diode (F-P LD), the un-polarized F-P LD outputs both a first polarization light and a second polarization light perpendicular to the first polarization light, which have different values in oscillating wavelengths depending polarization.

14. The wavelength division multiplexed-passive optical network of claim 12,
wherein in case that the first UPLS and the second UPLS are respectively the un-polarized Fabry-Perot laser diode (F-P LD), the un-polarized F-P LD has high injection efficiency by an anti-reflection coating on a front mirror

15. The wavelength division multiplexed-passive optical network of claim 12,
wherein incase that the first UPLS and the second UPLS are respectively the un-polarized Fabry-Perot laser diode (F-P LD), the un-polarized F-P LD has high output power by a high-reflection coating on a back mirror.

16. The wavelength division multiplexed-passive optical network of claim 12,
wherein in case that the first UPLS and the second UPLS are respectively the un-polarized Fabry-Perot laser diode (F-P LD), output power of the un-polarized F-P LD is increased depending on polarization thereof as bias current is increased.

17. A wavelength division multiplexed-passive optical network comprising:
an optical line termination (OLT);
a remote node (RN);
a plurality of optical network units (ONT)(ONT1,...,ONTn);
a single mode fiber (SMF) for connecting the OLT and the RN; and
a plurality of distribution fibers (DF1,...,DFn) for connecting the RN and the plurality of optical network units (ONT) (ONT1,...,ONTn),
wherein the OLT comprises A-band broadband light source (A-band BLS), being oscillated at an A band, for outputting first incoherent light; B-band BLS, being oscillated at a B band, for outputting second incoherent light; a first circulator (circulator 1) being connected to the A-band BLS; a second circulator (circulator 2) being connected to the B-band BLS; a first arrayed waveguide grating (AWG1) having n-numbered output ports for filtering the first incoherent light into n-numbered groups; a first WDM filter (WDM1) being connected to the first circulator, the second circulator, and the first AWG, respectively; a second WDM filter (WDM2) being connected to the first circulator, the second circulator, and the SMF, respectively; and n-numbered first optical transceivers (TRx) respectively being connected to the first AWG,
wherein the RN comprises a second AWG (AWG2) having n-numbered output ports for filtering the second incoherent light into n-numbered groups,
wherein the plurality of optical network units (ONT) (ONT1,...,ONTn) respectively comprises n-numbered second optical transceivers (TRx) being connected to the second AWG,
wherein the first optical transceivers (TRx) respectively comprise a third WDM filter (WDM 3) into which an up-stream data optical signal divided through the first AWG is inputted; a first optical transmitter (Tx), being connected to the third WDM filter, for transmitting a down-stream data optical signal; and a first optical receiver (Rx), being connected to the third WDM filter, for receiving the up-stream data optical signal,
wherein the second optical transceivers (TRx) respectively comprise a fourth WDM filter (WDM 4) into which the down-stream data optical signal divided through the second AWG is inputted; a second optical transmitter (Tx), being connected to the fourth WDM filter, for transmitting the up-stream data optical signal; and a second optical receiver (Rx), being connected to the fourth WDM filter, for receiving the down-stream data optical signal,
wherein the first optical transmitter (Tx) comprises a first un-polarized light source (UPLS) being wavelength-locked to the first incoherent light; and a first driver for modulating the first UPLS,
wherein the second optical transmitter (Tx) comprises a second UPLS being wavelength-locked to the second incoherent light; and a second driver for modulating the second UPLS,
wherein the first optical receiver (Rx) comprises a first photodiode (PD) for converting the transmitted up-stream data optical signal into an electrical signal, and
wherein the second optical receiver (Rx) comprises a second photodiode (PD) for converting the transmitted down-stream data optical signal into an electrical signal.

18. The wavelength division multiplexed-passive optical network of claim 17,
wherein the first UPLS and the second UPLS are respectively an un-polarized Fabry-Perot laser diode (F-P LD) or an un-polarized a reflective semiconductor optical amplifier (RSOA).

19. The wavelength division multiplexed-passive optical network of claim 18,
wherein incase that the first UPLS and the second UPLS are respectively the un-polarized Fabry-Perot laser diode (F-P LD), the un-polarized F-P LD outputs both a first polarization light and a second polarization light perpendicular to the first polarization light, which have different values in oscillating wavelengths depending polarization.

20. The wavelength division multiplexed-passive optical network of claim 18,
wherein in case that the first UPLS and the second UPLS are respectively the un-polarized Fabry-Perot laser diode (F-P LD), the un-polarized F-P LD has high injection efficiency by an anti-reflection coating on a front mirror

21. The wavelength division multiplexed-passive optical network of claim 18,
wherein incase that the first UPLS and the second UPLS are respectively the un-polarized Fabry-Perot laser diode (F-P LD), the un-polarized F-P LD has high output power by a high-reflection coating on a back mirror.

22. The wavelength division multiplexed-passive optical network of claim 18,
wherein in case that the first UPLS and the second UPLS are respectively the un-polarized Fabry-Perot laser diode (F-P LD), output power of the un-polarized F-P LD is increased depending on polarization thereof as bias current is increased.

23. The wavelength division multiplexed-passive optical network of claim 17 or 18,
wherein the first incoherent light and the second incoherent light are respectively an amplified spontaneous emission (ASE)-based incoherent light.

24. A wavelength division multiplexed-passive optical network comprising:
an optical line termination (OLT);
a remote node (RN);
a plurality of optical network units (ONT)(ONT1,...,ONTn);
a single mode fiber (SMF) for connecting the OLT and the RN; and
a plurality of distribution fibers (DF1,...,DFn) for connecting the RN and the plurality of optical network units (ONT) (ONT1,...,ONTn),
wherein the OLT comprises a first arrayed waveguide grating (AWG1) having n-numbered output ports; and n-numbered first optical transceivers (TRx) respectively being connected to the first AWG,
wherein the RN comprises a second AWG (AWG2) having n-numbered output ports,
wherein the plurality of optical network units (ONT) (ONT1,...,ONTn) respectively comprises n-numbered second optical transceivers (TRx) being connected to the second AWG,
wherein the first optical transceivers (TRx) respectively comprise a first WDM filter (WDM1) into which an up-stream data optical signal divided through the first AWG is inputted; a first optical transmitter (Tx), being connected to the first WDM filter, for transmitting a down-stream data optical signal; and a first optical receiver (Rx), being connected to the first WDM filter, for receiving the up-stream data optical signal,
wherein the second optical transceivers (TRx) respectively comprise a second WDM filter (WDM2) into which the down-stream data optical signal divided through the second AWG is inputted; a second optical transmitter (Tx), being connected to the second WDM filter, for transmitting the up-stream data optical signal; and a second optical receiver (Rx), being connected to the second WDM filter, for receiving the down-stream data optical signal,
wherein the first optical transmitter (Tx) comprises a first broadband or multi-wavelength un-polarized light source (UPLS); and a first driver for modulating the first broadband or multi-wavelength UPLS, and the second optical transmitter (Tx) comprises a second broadband or multi-wavelength UPLS; and a second driver for modulating the second broadband or multi-wavelength UPLS, and
wherein the first optical receiver (Rx) comprises a first photodiode (PD) for converting the transmitted up-stream data optical signal into an electrical signal, and the second optical receiver (Rx) comprises a second photodiode (PD) for converting the transmitted down-stream data optical signal into an electrical signal.

25. The wavelength division multiplexed-passive optical network of claim 24,
wherein the first broadband or multi-wavelength UPLS and the second broadband or multi-wavelength UPLS are respectively an un-polarized Fabry-Perot laser diode (F-P LD) or an un-polarized a reflective semiconductor optical amplifier (RSOA).

26. The wavelength division multiplexed-passive optical network of claim 25,
wherein incase that the first broadband or multi-wavelength UPLS and the second broadband or multi-wavelength UPLS are respectively the un-polarized Fabry-Perot laser diode (F-P LD), the un-polarized F-P LD outputs both a first polarization light and a second polarization light perpendicular to the first polarization light, which have different values in oscillating wavelengths depending polarization.

27. The wavelength division multiplexed-passive optical network of claim 25,
wherein in case that the first broadband or multi-wavelength UPLS and the second broadband or multi-wavelength UPLS are respectively the un-polarized Fabry-Perot laser diode (F-P LD), the un-polarized F-P LD has high injection efficiency by an anti-reflection coating on a front mirror

28. The wavelength division multiplexed-passive optical network of claim 25,
wherein incase that the first broadband or multi-wavelength UPLS and the second broadband or multi-wavelength UPLS are respectively the un-polarized Fabry-Perot laser diode (F-P LD), the un-polarized F-P LD has high output power by a high-reflection coating on a back mirror.

29. The wavelength division multiplexed-passive optical network of claim 25,
wherein in case that the first broadband or multi-wavelength UPLS and the second broadband or multi-wavelength UPLS are respectively the un-polarized Fabry-Perot laser diode (F-P LD), output power of the un-polarized F-P LD is increased depending on polarization thereof as bias current is increased.

30. A wavelength division multiplexed-passive optical network for transmitting a broadcast signal and a point-to-point signal comprising:
an optical line termination (OLT);
a remote node (RN);
a plurality of optical network units (ONT)(ONT1,...,ONTn);
a single mode fiber (SMF) for connecting the OLT and the RN; and
a plurality of distribution fibers (DF1,...,DFn) for connecting the RN and the plurality of optical network units (ONT) (ONT1,...,ONTn),
wherein the OLT comprises a first arrayed waveguide grating (AWG1) having n-numbered output ports; n-numbered first optical transceivers (TRx) respectively being connected to the first AWG; and a broadband or multi-wavelength un-polarized light source (UPLS) for outputting an optical signal modulated by a broadcast signal; and a WDM filter for combining the optical signal modulated by the broadcast signal with a down-stream data optical signal multiplexed at the first AWG,
wherein the first optical transceivers (TRx) respectively comprise a first WDM filter (WDM1) into which an up-stream data optical signal divided through the first AWG is inputted; a first optical transmitter (Tx), being connected to the first WDM filter, for transmitting the down-stream data optical signal; and a first optical receiver (Rx), being connected to the first WDM filter, for receiving the up-stream data optical signal,
wherein the RN comprises a second AWG (AWG2) having n-numbered output ports,
wherein the plurality of optical network units (ONT) (ONT1,...,ONTn) respectively comprises n-numbered second optical transceivers (TRx) being connected to the second AWG, and
wherein the second optical transceivers (TRx) respectively comprise a second WDM filter (WDM2) into which the down-stream data optical signal divided through the second AWG is inputted; a second optical transmitter (Tx), being connected to the second WDM filter, for transmitting the up-stream data optical signal; a second optical receiver (Rx2), being connected to the second WDM filter, for receiving the down-stream data optical signal; and a third optical receiver (Rx3), being connected to the second WDM filter, for receiving the optical signal modulated by the broadcast signal which is outputted from the broadband or multi-wavelength UPLS.

31. The wavelength division multiplexed-passive optical network for transmitting a broadcast signal and a point-to-point signal of claim 30,
wherein the broadband or multi-wavelength UPLS is an un-polarized Fabry-Perot laser diode (F-P LD) or an un-polarized a reflective semiconductor optical amplifier (RSOA).

32. The wavelength division multiplexed-passive optical network for transmitting a broadcast signal and a a point-to-point signal of claim 31,
wherein incase that the broadband or multi-wavelength UPLS is the un-polarized Fabry-Perot laser diode (F-P LD), the un-polarized F-P LD outputs both a first polarization light and a second polarization light perpendicular to the first polarization light, which have different values in oscillating wavelengths depending polarization.

33. The wavelength division multiplexed-passive optical network for transmitting a broadcast signal and a point-to-point signal of claim 31,
wherein in case that the broadband or multi-wavelength UPLS is the un-polarized Fabry-Perot laser diode (F-P LD), the un-polarized F-P LD has high injection efficiency by an anti-reflection coating on a front mirror

34. The wavelength division multiplexed-passive optical network for transmitting a broadcast signal and a point-to-point signal of claim 31,
wherein incase that the broadband or multi-wavelength UPLS is the un-polarized Fabry-Perot laser diode (F-P LD), the un-polarized F-P LD has high output power by a high-reflection coating on a back mirror.

35. The wavelength division multiplexed-passive optical network for transmitting a broadcast signal and a point-to-point signal of claim 31,
wherein in case that the broadband or multi-wavelength UPLS is the un-polarized Fabry-Perot laser diode (F-P LD), output power of the un-polarized F-P LD is increased depending on polarization thereof as bias current is increased.
